# FASCICULE DE BREVET EUROPEEN

(11) **EP 3 222 876 B1**
(45) Date de publication et mention de la délivrance du brevet: **23.10.2019**
(21) Numéro de dépôt: 17161246.8
(22) Date de dépôt: 16.03.2017
(51) Int. Cl.: F16F 15/14

(54) **DISPOSITIF D'AMORTISSEMENT PENDULAIRE**
TILGERSCHWINGUNGSDÄMPFER
PENDULUM DAMPING DEVICE

(30) Priorité: 21.03.2016 FR 1652376
(43) Date de publication de la demande: 27.09.2017
(73) Titulaire: Valeo Embrayages, 80009 Amiens Cedex 2 (FR)
(72) Inventeur: HENNEBELLE, Michaël, 80000 AMIENS (FR); VERHOOG, Roel, 60190 GOURNAY SUR ARONDE (FR); GRIECO, Giovanni, 92700 COLOMBES (FR); SALVADORI, David, 60530 LE MESNIL EN THELLE (FR)
(74) Mandataire: Cardon, Nicolas

(56) Documents cités:
- DE-A1-102011 086 436
- DE-A1-102012 214 214
- FR-A1- 2 990 736

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur.

En variante, dans une telle application, le dispositif d'amortissement pendulaire peut être intégré à un disque de friction de l'embrayage ou à un convertisseur de couple hydrodynamique ou à un volant solidaire du vilebrequin ou à un double embrayage à sec ou humide.

Un tel dispositif d'amortissement pendulaire met classiquement en oeuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires du corps pendulaire.

Lors du démarrage ou lors de l'arrêt du moteur thermique du véhicule, de faibles régimes peuvent entraîner une désynchronisation des corps pendulaires par rapport au support, de sorte que ces corps pendulaires peuvent chuter radialement et venir frapper contre le support. Un tel choc peut occasionner des vibrations du support et/ou des bruits non souhaitables. De tels bruits et/ou de telles vibrations non souhaitables peuvent aussi se produire lors de chocs entre corps pendulaire et support à l'issue du déplacement de ce corps pendulaire pour filtrer une oscillation de torsion.

La demande DE 10 2012 214 214 divulgue un dispositif d'amortissement pendulaire comprenant: un support mobile autour d'un axe de rotation, au moins un corps pendulaire, mobile par rapport au support et, un système d'atténuation du bruit se produisant lors d'un choc du corps pendulaire sur le support, le système d'atténuation du bruit étant fabriqué en matière plastique.

La demande DE 10 2011 086 436, qui divulgue un dispositif selon le préambule de la revendication 1, enseigne de disposer de chaque côté d'un support de dispositif d'amortissement pendulaire une pièce métallique traversée par un rivet, chaque pièce métallique supportant des moyens d'amortissement de la venue en butée d'un corps pendulaire contre ce support.

Il existe un besoin pour réduire, notamment supprimer, les inconvénients ci-dessus se produisant notamment lors de chute(s) radiale(s) d'un corps pendulaire sur le support d'un dispositif d'amortissement pendulaire.

L'invention a pour objet de répondre à ce besoin et elle y parvient, selon un premier aspect, à l'aide d'un dispositif d'amortissement pendulaire selon la revendication 1.

Ce dispositif comprend :
- un support mobile autour d'un axe de rotation,
- au moins un corps pendulaire, mobile par rapport au support et,
- un système d'atténuation du bruit se produisant lors du choc du corps pendulaire contre le support, ce système étant disposé axialement de chaque côté du support et serrant axialement ce dernier.

La présence du système d'atténuation permet de pincer le support, ce qui limite les vibrations de ce dernier à la suite d'un choc du corps pendulaire sur ce dernier. Le système d'atténuation peut ainsi jouer le rôle d'un filtre pour ces vibrations. On remédie ainsi aux problèmes identifiés ci-dessus se produisant par exemple lors du démarrage ou lors de l'arrêt du moteur thermique du véhicule. Des fréquences comprises entre 1000 Hz et 3000 Hz peuvent par exemple être filtrées.

Le système d'atténuation du bruit est fabriqué en matière plastique. Le plastique est particulièrement adapté pour permettre de limiter les vibrations du support à la suite d'un choc du corps pendulaire sur ce dernier.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support» ,
- « angulairement » ou « circonférentiellement » signifie « autour de l'axe de rotation du support »,
- « orthoradialement » signifie « perpendiculairement à une direction radiale »,
- « solidaire » signifie « rigidement couplé »,
- la position de repos d'un corps pendulaire est celle dans laquelle ce corps pendulaire est centrifugé sans être soumis à des oscillations de torsion provenant des acyclismes du moteur thermique, et
- la dimension radiale d'un élément est la différence entre : (i) la distance la plus grande de cet élément à l'axe de rotation, et (ii) la distance la plus faible de cet élément à l'axe de rotation.

Selon un premier exemple de mise en oeuvre de l'invention, le système d'atténuation comprend une première partie disposée axialement d'un premier côté du support et une deuxième partie disposée axialement d'un deuxième côté du support, la première partie et la deuxième partie étant des pièces distinctes solidarisées au support.

La première partie du système d'atténuation et la deuxième partie du système d'atténuation peuvent avoir toutes deux la même forme, lorsqu'observées perpendiculairement à l'axe de rotation.

La solidarisation entre les premières et deuxièmes parties peut se faire sans l'aide de pièce additionnelle. L'une de ces parties porte par exemple des formes mâles tandis que l'autre de ces parties porte des formes femelles, et ces formes coopèrent pour permettre cette solidarisation, notamment par encliquetage.

En variante, la solidarisation entre ces premières et deuxièmes parties peut se faire via des moyens de liaison, par exemple des rivets ou des vis.

En variante encore, la solidarisation entre ces premières et deuxièmes parties peut se faire par l'intermédiaire du support sur lequel chacune de la première et de la deuxième partie est fixée. Chaque partie présente par exemple des pions coopérant dans des trous du support pour fixer ladite partie sur le support.

Selon un deuxième exemple, le système d'atténuation comprend une première partie disposée axialement d'un premier côté du support, et une deuxième partie disposée axialement d'un deuxième côté du support, la première partie et la deuxième partie formant une seule et même pièce surmoulée sur le support. Le surmoulage est par exemple réalisé par impression en trois dimensions sur le support. Similairement à ce qui a été mentionné en rapport au premier exemple de mise en oeuvre de l'invention, la première et la deuxième partie du système d'atténuation peuvent avoir la même forme, lorsqu'observées perpendiculairement à l'axe de rotation.

Selon ce deuxième exemple, la zone du support sur laquelle on surmoule le système d'atténuation du bruit peut comprendre des trous traversants et ces trous sont alors bouchés par la matière surmoulée. On assure ainsi une forte cohésion entre le support et le système d'atténuation du bruit.

Selon l'un ou l'autre des modes de réalisation ci-dessus, chaque partie du système d'atténuation est fabriquée en matière plastique, par exemple en PA66, en PA64, en Hytrel®, en un alliage thermoplastique ou en élastomère, cette liste n'étant pas limitative.

Chacune de la première et de la deuxième partie du système d'atténuation du bruit est disposée de manière à permettre un chevauchement radial entre la zone radialement extérieure du système d'atténuation du bruit et la zone radialement intérieure du corps pendulaire. Chaque partie du système d'atténuation du bruit présente alors une dimension axiale réduite, au niveau où se produit le chevauchement radial avec le corps pendulaire pour libérer l'espace axial nécessaire au débattement de ce corps pendulaire. Ce chevauchement radial peut permettre à chaque partie du système d'atténuation de former une pièce d'interposition axiale, remplaçant ainsi des patins.

Le déplacement du corps pendulaire par rapport au support peut être guidé par deux organes de roulement auquel cas le dispositif d'amortissement est qualifié de « bifilaire ».

Chaque organe de roulement coopère par exemple avec au moins une première piste de roulement solidaire du support et avec au moins une deuxième piste de roulement solidaire du corps pendulaire. Chaque organe de roulement coopère par exemple avec la ou les pistes de roulement solidaires du support et avec la ou les pistes de roulement solidaires du corps pendulaire uniquement via sa surface extérieure.

Chaque organe de roulement est par exemple un rouleau de section circulaire dans un plan perpendiculaire à l'axe de rotation du support. Ce rouleau peut comprendre plusieurs portions cylindriques successives de rayon différent. Les extrémités axiales du rouleau peuvent être dépourvues de rebord annulaire fin. Le rouleau est par exemple réalisé en acier. Le rouleau peut être creux ou plein.

Dans tout ce qui précède, le dispositif comprend par exemple un nombre de corps pendulaires compris entre deux et huit, notamment trois, quatre, cinq ou six corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède la forme des premières et des deuxièmes pistes de roulement précitées peut être telle que chaque corps pendulaire soit uniquement déplacé par rapport au support en translation autour d'un axe fictif parallèle à l'axe de rotation du support.

En variante, la forme des pistes de roulement peut être telle que chaque corps pendulaire soit déplacé par rapport au support à la fois :
- en translation autour d'un axe fictif parallèle à l'axe de rotation du support et,
- également en rotation autour du centre de gravité de ladite masse pendulaire, un tel mouvement étant encore appelé « mouvement combiné » et divulgué par exemple dans la demande DE 10 2011 086 532.

Dans tout ce qui précède, le dispositif d'amortissement pendulaire peut comprendre deux supports solidaires et le corps pendulaire peut ne comprendre qu'une seule masse pendulaire disposée axialement entre les deux supports, ou le cas échéant plusieurs masses pendulaires solidarisées entre elles et disposées axialement entre les deux supports. Dans ce cas, chaque support peut comprendre un système d'atténuation du bruit se produisant lors d'un choc du corps pendulaire contre ce support, ledit système serrant axialement ce support. En variante, le système d'atténuation du bruit associé à chaque support n'est disposé axialement que du côté de ce support qui est en regard du corps pendulaire

En variante, dans tout ce qui précède, le corps pendulaire peut comprendre une première masse pendulaire disposée axialement d'un premier côté du support et une deuxième masse pendulaire disposée axialement d'un deuxième côté du support et au moins un organe de liaison solidarisant cette première et cette deuxième masse pendulaire.

Lorsque le corps pendulaire comprend deux masses pendulaires, la première partie du système d'atténuation du bruit peut être disposée axialement entre le support et la première masse pendulaire et la deuxième partie dudit système peut être disposée axialement entre le support et la deuxième masse pendulaire.

Avec un tel corps pendulaire à deux masses pendulaires, la zone radialement extérieure de la première partie dudit système peut présenter une dimension axiale réduite, de manière à augmenter la distance axiale entre la première masse pendulaire et ladite zone radialement extérieure, et la zone radialement extérieure de la deuxième partie dudit système peut présenter une dimension axiale réduite, de manière à augmenter la distance axiale entre la deuxième masse pendulaire et ladite zone radialement extérieure. Comme déjà mentionné, on fait ici en sorte que le chevauchement radial entre la zone radialement extérieure du système d'atténuation du bruit et la zone radialement intérieure des masses pendulaires n'affecte pas le débattement de ces masses pendulaires, et donc les performances de filtrage fournies par le dispositif d'amortissement pendulaire.

Toujours lorsque le corps pendulaire comprend deux masses pendulaires, au moins un organe d'amortissement de venue en butée du corps pendulaire contre le support peut être relié à chaque partie du système d'atténuation du bruit. Cet organe d'amortissement de venue en butée est par exemple directement fixé à chaque partie du système d'atténuation du bruit. En variante, l'organe d'amortissement de venue en butée et chaque partie du système d'atténuation du bruit sont reliés indirectement via le support. Cet organe d'amortissement de venue en butée peut être disposé axialement entre les deux parties du système d'atténuation du bruit.

Chaque organe d'amortissement de venue en butée peut alors être porté par le support et disposé axialement entre la première masse pendulaire et la deuxième masse pendulaire de ce corps. Chaque organe d'amortissement de venue en butée est par exemple logé dans l'épaisseur du support, pouvant localement faire saillie au-delà de cette épaisseur.

Deux organes d'amortissement de venue en butée portés par le support sont par exemple dédiés à chaque corps pendulaire.

Chacun de ces organes d'amortissement de venue en butée portés par le support peut être apte à venir simultanément en contact avec le corps pendulaire et le support pour des positions relatives du corps pendulaire par rapport au support, ces positions relatives comprenant
- la position à l'issue d'un déplacement dans le sens trigonométrique de ce corps pendulaire depuis la position de repos pour filtrer une oscillation de torsion, et/ou
- la position à l'issue d'un déplacement dans le sens non-trigonométrique de ce corps pendulaire depuis la position de repos pour filtrer une oscillation de torsion, et/ou
- la position résultant d'une chute radiale du corps pendulaire, par exemple lors de l'arrêt ou le démarrage du moteur thermique du véhicule.

Chaque organe d'amortissement de venue en butée est par exemple réalisé en élastomère. Cet organe d'amortissement de butée est par exemple disposé au moins en partie dans une fenêtre recevant un organe de liaison du corps pendulaire.

Chaque organe d'amortissement de butée vient par exemple en contact avec un organe de liaison pour tout ou partie des positions relatives du corps pendulaire par rapport au support précitées.

En complément de ces organes d'amortissement de venue en butée, chaque corps pendulaire peut porter un organe d'amortissement de venue en butée additionnel, étant apte à venir en appui contre le bord radialement extérieur du support, pour participer à l'amortissement de la venue en butée pour tout ou partie des positions relatives du corps pendulaire par rapport au support mentionnées ci-dessus.

Lorsque le corps pendulaire comprend deux masses pendulaires et que des organes d'amortissement de venue en butée reliés aux parties du système d'atténuation du bruit sont présents, chacun de ces organes d'amortissement de venue en butée peut présenter successivement lorsque l'on se déplace radialement vers l'extérieur : une première portion de première dimension axiale, et une deuxième portion de deuxième dimension axiale, la deuxième dimension axiale étant inférieure à la première dimension axiale. Un chanfrein est par exemple ménagé au niveau de la deuxième portion de cet organe d'amortissement de venue en butée. Une telle configuration de ces organes d'amortissement de venue en butée permet de favoriser le fluage de matière plastique en direction des masses pendulaires, lorsque cet organe d'amortissement de venue en butée est comprimé, et permet ainsi de rendre plus difficile le fluage de matière plastique en direction des pièces du système d'atténuation du bruit.

Selon une première réalisation préférée, l'organe de roulement coopère avec une seule première piste de roulement et avec une seule deuxième piste de roulement, et cette deuxième piste de roulement est définie par l'organe de liaison du corps pendulaire. Une portion du contour de cet organe de liaison définit par exemple la deuxième piste de roulement. En variante, un revêtement peut être déposé sur cette portion du contour de l'organe de liaison pour former la deuxième piste de roulement. Un tel organe de liaison est par exemple emmanché en force via chacune de ses extrémités axiales dans une ouverture ménagée dans une des masses pendulaires. En variante, l'organe de liaison peut être soudé ou vissé ou riveté via ses extrémités axiales sur chaque masse pendulaire.

Selon la première réalisation préférée, le déplacement de chaque corps pendulaire par rapport au support peut être guidé par au moins deux organes de roulement, notamment exactement deux organes de roulement. Deux organes de liaison coopérant chacun avec un organe de roulement peuvent être prévus.

Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon la première réalisation préférée, chaque organe de roulement peut être reçu dans une fenêtre du support recevant déjà un organe de liaison et ne recevant aucun autre organe de roulement. Cette fenêtre est par exemple définie par un contour fermé dont une portion définit la première piste de roulement solidaire du support qui coopère avec cet organe de roulement.

Selon une deuxième réalisation préférée, l'organe de roulement coopère d'une part avec une seule première piste de roulement solidaire du support, et d'autre part avec deux deuxièmes pistes de roulement solidaires du corps pendulaire. Chaque masse pendulaire présente alors une ouverture dont une partie du contour définit une de ces deuxièmes pistes de roulement.

Selon cette deuxième réalisation préférée, chaque organe de liaison regroupe par exemple plusieurs rivets, et cet organe de liaison est reçu dans une fenêtre du support, tandis que l'organe de roulement est reçu dans une ouverture du support, distincte d'une fenêtre recevant un organe de liaison.

Selon cette deuxième réalisation préférée, deux organes de roulement peuvent guider le déplacement du corps pendulaire par rapport au support, et chaque organe de roulement coopère avec une première piste de roulement dédiée à cet organe de roulement et avec deux deuxièmes pistes de roulement dédiées à cet organe de roulement.

Selon cette deuxième réalisation préférée, chaque organe de roulement peut alors comprendre successivement axialement:
- une portion disposée dans une ouverture de la première masse pendulaire et coopérant avec la deuxième piste de roulement formée par une partie du contour de cette ouverture,
- une portion disposée dans une ouverture du support et coopérant avec la première piste de roulement formée par une partie du contour de cette ouverture, et
- une portion disposée dans une ouverture de la deuxième masse pendulaire et coopérant avec la deuxième piste de roulement formée par une partie du contour de cette ouverture.

Selon ce premier exemple de mise en oeuvre, il existe un unique support guidant via sa deuxième partie le déplacement des corps pendulaires.

Indépendamment du nombre de supports du dispositif et indépendamment du fait que chaque corps pendulaire présente ou non deux masses pendulaires, chacune de la première et de la deuxième partie du système d'atténuation du bruit peut présenter une pluralité de cavités de contour fermé se succédant circonférentiellement, et non destinées à recevoir des moyens de fixation au support de ladite partie du système d'atténuation et/ou des moyens de fixation de ladite partie du système d'atténuation à l'autre partie du système d'atténuation.

Deux cavités successives peuvent être séparées par des ponts de matière formant des nervures radiales. De telles cavités peuvent conférer au système d'atténuation du bruit une souplesse radiale tout en maintenant la rigidité axiale souhaitée pour ce dernier. De telles cavités ne servent ainsi pas à la fixation du système d'atténuation du bruit sur le support mais d'autres cavités pourraient être prévues dans ledit système dans ce but.

En variante, chacune de la première partie et de la deuxième partie du système d'atténuation du bruit peuvent être dépourvues de cavité de contour fermé, dès lors que de telles cavités ne sont pas destinées à recevoir des moyens de fixation. Autrement dit, toutes les cavités ménagées dans le système servent à fixer ce dernier sur le support et/ou à fixer la première partie du système à la deuxième partie du système.

Dans tout ce qui précède, la dimension radiale de chaque partie du système d'atténuation du bruit peut être petite devant celle du support. La dimension radiale de chaque partie du système d'atténuation représente par exemple entre 10 % et 30 % de la dimension radiale du support.

En variante, la dimension radiale de chaque partie du système d'atténuation peut être plus importante par rapport à celle du support, étant par exemple comprise entre 30 % et 60 % de la dimension radiale du support.

Le système d'atténuation du bruit peut s'étendre radialement jusqu'au bord radialement intérieur du support.

La dimension axiale de chaque partie du système d'atténuation peut dépendre de la dimension axiale du corps pendulaire. Dans le cas d'un corps pendulaire à deux masses pendulaires reliées entre elles, la dimension axiale de chaque partie du système d'atténuation peut être comprise entre 0,5 mm et 1,2 fois la dimension axiale d'une masse pendulaire, étant notamment comprise entre 2 mm et la dimension axiale de la masse pendulaire, mieux étant comprise entre 2 mm et 0,8 fois la dimension axiale de la masse pendulaire.

L'invention a encore pour objet, selon un autre de ses aspects, un dispositif d'amortissement pendulaire comprenant :
- deux supports solidaires et décalés axialement, les deux supports étant mobiles en rotation autour d'un axe,
- au moins un corps pendulaire ne comprenant qu'une seule masse pendulaire disposée axialement entre les deux supports, ou plusieurs masses pendulaires solidarisées entre elles et disposées axialement entre les deux supports,
chaque support portant un système d'atténuation du bruit se produisant lors du choc du corps pendulaire contre ce support, ce système étant disposé axialement d'au moins un côté de ce support, notamment au moins du côté de ce support axialement en regard du corps pendulaire, notamment uniquement du côté de ce support axialement en regard du corps pendulaire.

Chaque système peut alors être formé par une seule des parties du système d'atténuation du bruit selon l'aspect précédent de l'invention. Tout ce qui a été mentionné précédemment, notamment en rapport avec les caractéristiques d'une telle partie de système d'atténuation du bruit, s'applique encore à cet autre aspect de l'invention.

L'invention a pour objet selon un autre aspect, un dispositif d'amortissement pendulaire comprenant :
- un support mobile autour d'un axe de rotation,
- au moins un corps pendulaire, mobile par rapport au support et,
- un système d'atténuation du bruit se produisant lors du choc du corps pendulaire contre le support, ce système étant disposé axialement au moins d'un côté du support.

Tout ou partie de ce qui a été mentionné précédemment s'applique encore à cet autre aspect de l'invention.

L'invention a encore pour objet, selon un autre de ses aspects, un composant pour système de transmission d'un véhicule automobile, le composant étant notamment un double volant amortisseur, un convertisseur de couple hydrodynamique, ou un composant de système de transmission hybride, ou un volant solidaire du vilebrequin, ou un disque de friction d'embrayage ou un double embrayage à sec ou humide, ou un simple embrayage humide, ce composant comprenant un dispositif d'amortissement pendulaire tel que défini ci-dessus.

Le support du dispositif d'amortissement pendulaire peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

Dans le cas où le dispositif est intégré à un volant solidaire du vilebrequin, le support peut être solidaire de ce volant.

Le composant est notamment un disque de friction d'embrayage. Dans un tel cas, le support peut être connecté au moyeu du disque de friction, étant notamment soudé sur le moyeu de ce disque de friction.

L'invention pourra être mieux comprise à la lecture de la description qui va suivre d'exemples non limitatifs de mise en oeuvre de celle-ci et à l'examen du dessin annexé sur lequel :

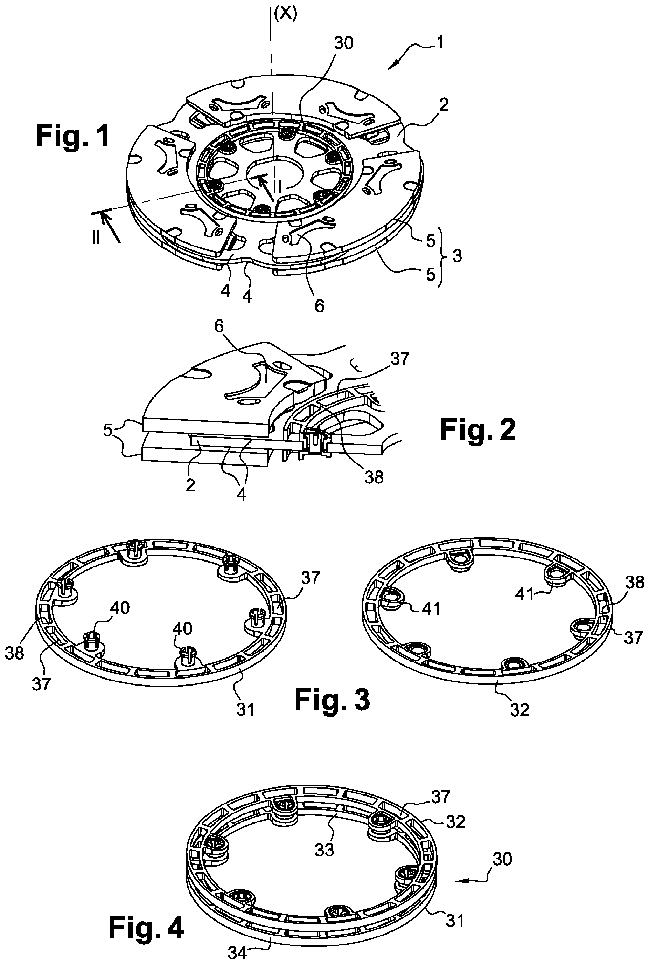

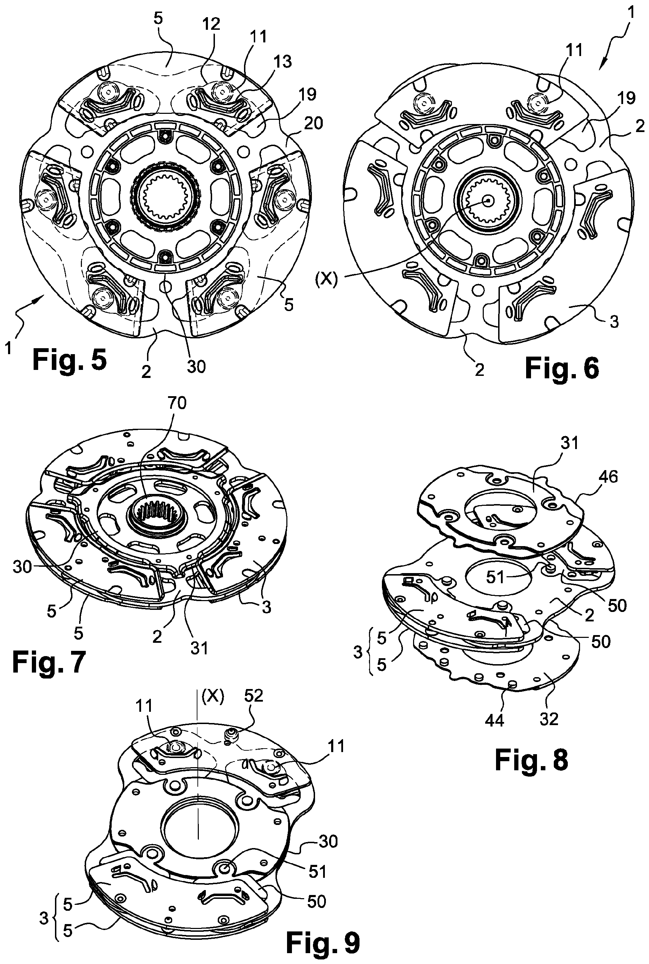

- les figures 1 à 6 représentent un dispositif d'amortissement pendulaire selon une première variante d'un premier exemple de mise en oeuvre de l'invention, cette première variante n'étant pas couverte par les revendications mais utile à la compréhension de l'invention, la figure 1 étant une vue en perspective de ce dispositif, la figure 2 une vue en coupe selon II-II de la figure 1, les figures 3 et 4 des vues en isolé du système d'atténuation du bruit des figures 1 et 2, respectivement à l'état éclaté et à l'état assemblé, les figures 5 et 6 représentant respectivement le dispositif lorsque les corps pendulaires sont au repos et lorsqu'ils se sont déplacés depuis la position de repos jusqu'en butée contre le support,
- la figure 7 représente, similairement à la figure 1, un dispositif selon une deuxième variante du premier exemple de mise en oeuvre de l'invention, cette deuxième variante n'étant pas couverte pas les revendications mais étant utile à la compréhension de l'invention,
- les figures 8 à 12 représentent un dispositif d'amortissement selon une troisième variante du premier exemple de mise en oeuvre de l'invention, les figures 8 et 9 étant respectivement des vues à l'état éclaté et à l'état assemblé, la figure 10 étant une vue de face d'un détail de ce dispositif, les figures 11 et 12 étant une vue de côté de ce qui est représenté sur la figure 10, respectivement sans et avec masse pendulaire représentée,
- les figures 13 à 15 représentent un dispositif selon un deuxième exemple, les figures 13 et 14 étant des vues partielles du dispositif, respectivement à l'état éclaté et à l'état assemblé, et la figure 15 étant une vue en coupe selon XV-XV de la figure 14, et
- la figure 16 représente un autre exemple de dispositif d'amortissement pendulaire, intégré à un disque de friction d'embrayage.

On a représenté sur la figure 1 un dispositif d'amortissement pendulaire 1 selon une première variante d'un premier exemple de mise en oeuvre de l'invention.

Ce dispositif 1 est ici destiné à être intégré à un disque de friction d'embrayage, par exemple associé à un moteur thermique notamment à deux, trois ou quatre cylindres.

Le dispositif d'amortissement pendulaire 1 comprend dans l'exemple considéré:
- un support 2 apte à se déplacer en rotation autour d'un axe X, et
- une pluralité de corps pendulaires 3 mobiles par rapport au support 2.

Le support 2 est par exemple destiné à être soudé sur le moyeu du disque de friction d'embrayage.

Dans l'exemple considéré, trois corps pendulaires 3 sont prévus, étant répartis de façon uniforme sur le pourtour de l'axe X.

Le support 2 est ici réalisé d'un seul tenant, ayant une forme de plaque s'étendant entre deux côtés 4 sensiblement parallèles.

Comme on peut le voir sur les figures 1 et 2, chaque corps pendulaire 3 comprend dans l'exemple considéré :
- deux masses pendulaires 5, chaque masse pendulaire 5 s'étendant axialement en regard d'un côté du support 2, et
- deux organes de liaison 6 solidarisant les deux masses pendulaires 5.

Les organes de liaison 6, encore appelés « entretoises », sont dans l'exemple considéré décalés angulairement.

Sur les figures 1, 2 et 5, le dispositif d'amortissement pendulaire 1 est au repos, c'est-à-dire qu'il ne filtre pas les oscillations de torsion transmises par la chaîne de propulsion du fait des acyclismes du moteur thermique.

Dans l'exemple des figures 1 et 2, chaque extrémité d'un organe de liaison 6 est soudée sur une masse pendulaire 5, de manière à solidariser ces deux masses pendulaires 5 Dans des variantes, chacune de ces extrémités pourrait être emmanchée en force dans une ouverture ménagée dans une des masses pendulaires 5. Chaque organe de liaison 6 s'étend en partie dans une fenêtre 19 ménagée dans le support 2. Dans l'exemple considéré, la fenêtre 19 définit un espace vide à l'intérieur du support 2, cette fenêtre 19 étant délimitée par un contour fermé 20.

Le dispositif 1 comprend encore dans l'exemple considéré des organes de roulement 11 guidant le déplacement des corps pendulaires 3 par rapport au support 2. Les organes de roulement 11 sont par exemple des rouleaux.

Dans l'exemple décrit, le mouvement par rapport au support 2 de chaque corps pendulaire 3 est guidé par deux organes de roulement 11, chacun d'entre eux coopérant dans l'exemple des figures avec l'un des organes de liaison 6 du corps pendulaire 3.

Chaque organe de roulement 11 coopère ici avec une seule première piste de roulement 12 solidaire du support 2, et avec une seule deuxième piste de roulement 13 solidaire du corps pendulaire 3 pour guider le déplacement de ce corps pendulaire 3.

Dans l'exemple considéré, chaque deuxième piste de roulement 13 est formée par une portion du bord radialement extérieur d'un organe de liaison 6.

Chaque première piste de roulement est définie par une partie du contour 20 d'une fenêtre 19.

Chaque première piste de roulement 12 est ainsi disposée radialement en regard d'une deuxième piste de roulement 13, de sorte qu'une même surface de roulement d'un organe de roulement 11 roule alternativement sur la première piste de roulement 12 et sur la deuxième piste de roulement 13. La surface de roulement de l'organe de roulement 11 est ici un cylindre de rayon constant.

Comme on peut le voir sur les figures 1 et 2, des organes d'amortissement de venue en butée 22 du corps pendulaire 3 contre le support 2 sont prévus. Chaque organe de liaison 6 est ici associé à un tel organe d'amortissement de venue en butée 22, chacun de ces derniers étant configurés pour s'interposer entre cet organe de liaison 6 et le bord radialement intérieur de la fenêtre 19 recevant cet organe de liaison 6.

Selon l'invention, un système d'atténuation 30 du bruit se produisant lors d'un choc du corps pendulaire 3 sur le support 2 est prévu. Ce système d'atténuation 30 est ici disposé de chaque côté du support 2 et serre axialement ce support 2.

Le système d'atténuation 30 comprend ici une première partie 31 disposée axialement d'un premier côté du support 2 et une deuxième partie 32 disposée axialement d'un deuxième côté de ce support 2. Chaque partie 31, 32 du système d'atténuation 30 est en matière plastique, notamment en PA66, en PA64, en Hytrel®, en un alliage thermoplastique ou en élastomère.

La première partie 31 et la deuxième partie 32 sont, selon le premier exemple de mise en oeuvre, des pièces distinctes solidarisées au support 2. Chaque partie 31, 32 présente selon la première variante, une dimension radiale faible, cette dernière étant par exemple comprise entre 10% et 30 % de la dimension radiale du support. Chaque partie 31, 32 présente ici une forme annulaire, lorsqu'observée perpendiculairement à l'axe de rotation X. Chaque partie 31, 32 s'étend alors entre un bord radialement intérieur circulaire 33 et un bord radialement extérieur circulaire 34.

On constate sur les figures 1 à 6 que chaque partie 31, 32 du système d'atténuation 30 du bruit présente, selon cette première variante du premier exemple de mise en oeuvre de l'invention, une pluralité de cavités 37 de contour fermé se succédant circonférentiellement. Ces cavités 37 sont deux à deux séparées par des ponts de matière 38 formant des nervures radiales. On constate que ces cavités 37 ne sont pas destinées à recevoir des moyens de fixation entre les parties 31 et 32 ou au support.

La solidarisation entre les premières et deuxièmes parties 31 et 32 se fait selon l'exemple des figures 1 à 6 à l'aide de formes mâles 40 portées par la première partie 31 et qui coopèrent avec des formes femelles 41 portées par la deuxième partie 32. La solidarisation s'effectue par exemple par encliquetage. Les formes mâles 41 permettent encore l'accrochage du système d'atténuation 30 sur le support 2, comme on le voit sur la figure 2.

Les formes mâles 41 et les formes femelles 42 peuvent être disposées radialement intérieurement par rapport aux cavités 37.

On constate sur les figures 1 à 6 que chaque partie 31 et 32 du système d'atténuation 30 est disposée radialement intérieurement par rapport aux corps pendulaires 3. Le système d'atténuation 30 forme alors une butée pour le déplacement radialement vers l'intérieur des corps pendulaires 3, et la matière dans laquelle ces parties 31 et 32 sont réalisées permet un amortissement des chutes radiales des corps pendulaires 3.

La figure 7 représente une deuxième variante du premier exemple de mise en oeuvre de l'invention. Le dispositif 1 diffère essentiellement de celui qui a été décrit en référence aux figures 1 à 6 par le fait que la première partie 31 et la deuxième partie 32 du système d'atténuation 30 sont dépourvues de cavité de contour fermé non destinées à recevoir des moyens de fixation similaires à celles décrites précédemment. Il n'existe ainsi pas, selon cette deuxième variante, de nervures radiales associées aux structures évidées des parties 31 et 32 selon la première variante.

Les figures 8 à 12 représentent une troisième variante du premier exemple de mise en oeuvre de l'invention.

Selon cette troisième variante, le dispositif d'amortissement pendulaire 1 ne comprend que deux corps pendulaires 3, et non plus trois.

On constate encore que chaque partie 31, 32 du système d'atténuation 30 du bruit présente une dimension radiale plus importante, cette dimension étant comprise entre 30% et 60% de la dimension radiale du support 2. On constate également que le bord radialement intérieur 33 de chaque partie 31, 32 s'étend jusqu'au bord radialement intérieur du support 2.

Selon cette troisième variante, la solidarisation de la première partie 31 à la deuxième partie 32 se fait via le support 2. Chaque partie 31, 32 porte par exemple des picots 44 venant s'encliqueter dans des trous de forme complémentaire ménagés dans le support 2.

Contrairement à ce qui a été décrit en référence aux première et deuxième variantes des figures 1 à 7, chaque partie 31, 32 du système d'atténuation 30 chevauche radialement, via sa zone radialement extérieure 46 la zone radialement intérieure des corps pendulaire 3.

Chacune desdites zones radialement extérieure 46 peut présenter une dimension axiale réduite, de manière à libérer l'espace axial nécessaire au débattement des corps pendulaires 3.

Dans la variante des figures 8 à 12, on constate que chaque partie 31, 32 du système d'atténuation 30 du bruit est reliée à deux organes d'amortissement de venue en butée 50 du corps pendulaire 3 contre le support 2. Dans l'exemple décrit, chaque organe d'amortissement de venue en butée 50 est reçu dans le bas, radialement parlant, d'une fenêtre 19 du support 2 recevant déjà un organe de liaison 6 du corps pendulaire. Chaque organe d'amortissement de venue en butée 50 est ici fixé par un même rivet 51 à la fois aux deux parties 31 et 32 du système d'atténuation 30, et au support 2. En variante, une tige issue d'une des parties 31 ou 32 peut être rivetée à chaud dans un trou ménagé dans l'autre des parties 31 et 32 pour assurer une fixation simultanée avec l'organe d'amortissement de venue en butée 50 et avec le support 2.

Chaque organe d'amortissement de venue en butée 50 porté par le support est ici disposé axialement entre la première masse pendulaire 5 et la deuxième masse pendulaire 5 du corps pendulaire 3.

Chaque organe d'amortissement de venue en butée 50 est ici réalisé en élastomère.

Chacun de ces organes d'amortissement de venue en butée 50 est ici configuré pour venir simultanément en contact avec un organe de liaison d'un corps pendulaire 3 et le support 2 pour des positions relatives de ce corps pendulaire 3 par rapport au support 2 qui sont :
- la position à l'issue d'un déplacement dans le sens trigonométrique de ce corps pendulaire 3 depuis la position de repos pour filtrer une oscillation de torsion, et/ou
- la position à l'issue d'un déplacement dans le sens non-trigonométrique de ce corps pendulaire 3 depuis la position de repos pour filtrer une oscillation de torsion, et/ou
- la position résultant d'une chute radiale du corps pendulaire 3, par exemple lors de l'arrêt ou le démarrage du moteur thermique du véhicule.

On constate également sur les figures 8 à 12 que chaque corps pendulaire 3 porte en outre un organe d'amortissement de venue en butée additionnel 52. Cet organe d'amortissement de venue en butée additionnel 52, par exemple également réalisé en élastomère, est apte à venir en appui contre le bord radialement extérieur du support 2, pour participer à l'amortissement de la venue en butée du corps pendulaire 3 contre le support 2 pour tout ou partie des positions relatives précitées du corps pendulaire 3 par rapport au support 2.

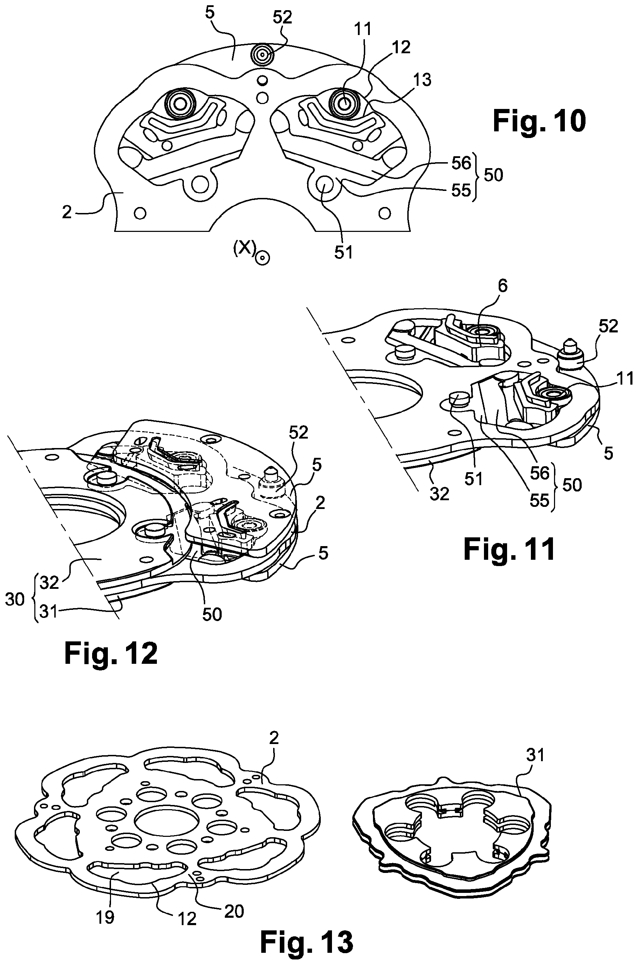

On constate par ailleurs sur les figures 10 et 11 que chaque organe d'amortissement de venue en butée 50 présente dans cette troisième variante lorsque l'on se déplace radialement vers l'extérieur successivement :
- une première portion 55 de première dimension axiale, et
- une deuxième portion 56 de deuxième dimension axiale, la deuxième dimension axiale étant inférieure à la première dimension axiale.

Cet amincissement de l'organe d'amortissement de venue en butée 50 permet de favoriser le fluage de matière plastique en direction des masses pendulaires 5, lorsque cet organe d'amortissement de venue en butée 50 est comprimé.

On va maintenant décrire, en référence aux figures 13 à 15, un dispositif d'amortissement 1 selon un deuxième exemple.

Contrairement à ce qui a été mentionné précédemment, la première partie 31 du système d'atténuation 30, qui est disposée axialement du premier côté du support 2, et la deuxième partie 32 de ce système, qui est disposée axialement du deuxième côté du support 2, forment une seule et même pièce surmoulée sur le support 2. Le surmoulage est par exemple réalisé par impression en trois dimensions sur le support. Similairement à ce qui a été mentionné en rapport au premier exemple de mise en oeuvre de l'invention des figures 1 à 12, la première 31 et la deuxième 32 partie du système d'atténuation 30 ont la même forme, lorsqu'observées perpendiculairement à l'axe de rotation X.

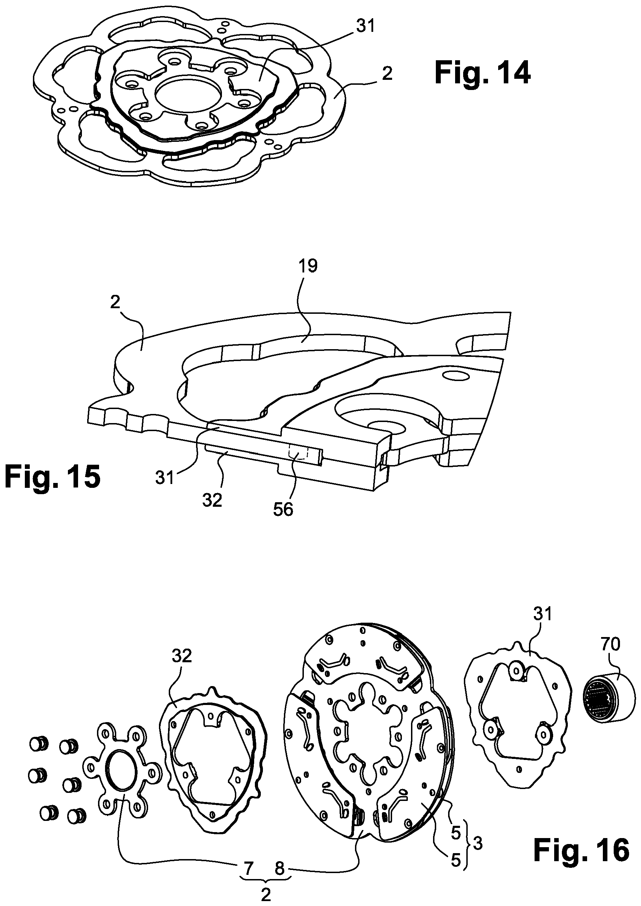

Selon ce deuxième exemple, et comme visible sur la figure 15, la zone du support 2 sur laquelle on surmoule le système d'atténuation 30 comprend des trous traversants et ces trous sont alors bouchés par la matière surmoulée, de manière à former des ponts de matière 56 entre chaque partie 31, 32 du système d'atténuation 30 d'une part. On assure ainsi une forte cohésion entre les différentes parties 31, 32 du système d'atténuation 30 d'une part, et entre le support 2 et ce système d'atténuation 30 du bruit d'autre part.

L'invention n'est pas limitée aux exemples qui viennent d'être décrits.

Dans l'exemple de la figure 16, qui peut concerner aussi bien le premier exemple de mise en oeuvre que le deuxième exemple, le support 2 comprend deux parties distinctes 7 et 8.

La première partie 7 s'étend majoritairement radialement à l'intérieur de la deuxième partie 8 et cette première partie 7 sert à connecter physiquement le dispositif d'amortissement pendulaire 2 au reste du système de transmission, le moyeu 70 d'un disque de friction d'embrayage dans l'exemple décrit. Cette connexion se fait par exemple par soudure de la première partie 7 du support 2 sur le moyeu 70. La deuxième partie 8 du support sert à guider le déplacement des corps pendulaires 3, portant plusieurs premières pistes de roulement 12.

La première partie 7 du support est ici obtenue par découpage de la zone centrale de la deuxième partie 8 du support 2.

Des applications à des composants autres qu'un disque de friction d'embrayage, par exemple un double volant amortisseur, un convertisseur de couple hydrodynamique, un double embrayage à sec ou humide, ou encore un simple embrayage humide, ou encore un composant de système de transmission hybride, ou encore un volant solidaire du vilebrequin sont par ailleurs possibles.

## Revendications

1. Dispositif d'amortissement pendulaire (1), comprenant ;
- un support (2) mobile autour d'un axe de rotation (X),
- au moins un corps pendulaire (3), mobile par rapport au support (2) et,
- un système d'atténuation (30) du bruit se produisant lors d'un choc du corps pendulaire (3) sur le support (2),
le système d'atténuation (30) du bruit étant fabriqué en matière plastique,
le système d'atténuation (30) comprenant une première partie (31) disposée axialement d'un premier côté du support (2) et une deuxième partie (32) disposée axialement d'un deuxième côté du support, la première partie (31) et la deuxième partie (32) étant des pièces distinctes solidarisées au support (2), chacune de la première (31) et de la deuxième (32) partie étant disposée de manière à permettre un chevauchement radial entre la zone radialement extérieure (46) du système d'atténuation (30) et la zone radialement intérieure du corps pendulaire (3), chaque partie (31, 32) du système d'atténuation (30) du bruit présentant une dimension axiale réduite, au niveau où se produit le chevauchement radial avec le corps pendulaire (3) pour libérer l'espace axial nécessaire au débattement de ce corps pendulaire (3), le système d'atténuation étant disposé axialement de chaque côté du support et **caractérisé en ce que** le système d'atténuation serre axialement le support (2), de manière à pincer le support (2).

2. Dispositif selon la revendication précédente, le corps pendulaire (3) comprenant une première masse pendulaire disposée axialement d'un premier côté du support (2) et une deuxième masse pendulaire disposée axialement d'un deuxième côté du support (2) et au moins un organe de liaison (6) solidarisant cette première et cette deuxième masse pendulaire.

3. Dispositif selon l'une des revendications 1 et 2, chacune de la première et de la deuxième partie (31, 32) du système d'atténuation (30) du bruit étant reliée à au moins un organe d'amortissement de venue en butée (50) du corps pendulaire (3) contre le support (2).

4. Dispositif selon les revendications 1 et 3, l'organe d'amortissement de venue en butée (50) étant disposé axialement entre les deux parties (31, 32) du système d'atténuation (30) du bruit.

5. Dispositif selon les revendications 2 et 3 ou selon la revendication 4, l'organe d'amortissement de venue en butée (50) étant porté par le support (2) et disposé axialement entre la première masse pendulaire (5) et la deuxième masse pendulaire (5).

6. Dispositif selon l'une quelconque des revendications 3 à 5, chaque organe d'amortissement de venue en butée (50) présentant successivement lorsque l'on se déplace radialement vers l'extérieur une première portion (55) de première épaisseur, et une deuxième portion (56) de deuxième épaisseur, la deuxième épaisseur étant inférieure à la première épaisseur.

7. Dispositif selon l'une quelconque des revendications 1 à 6, chaque corps pendulaire (3) portant un organe d'amortissement de venue en butée additionnel (52), étant apte à venir en appui contre le bord radialement extérieur du support (2).

8. Dispositif selon l'une quelconque des revendications 1 à 7, chacune de la première partie (31) et de la deuxième partie (32) du système d'atténuation du bruit présentant une pluralité de cavités (37) de contour fermé se succédant circonférentiellement et non destinées à recevoir des moyens de fixation au support (2) de ladite partie (31, 32) du système d'atténuation (30) du bruit.

## Patentansprüche

1. Schwingungstilgervorrichtung (1), die Folgendes aufweist:
- eine um eine Drehachse (X) herum bewegliche Grundplatte (2),
- mindestens einen bezüglich der Grundplatte (2) beweglichen Pendelkörper (3) und
- ein Dämpfungssystem (30) für das Geräusch, das bei einem Aufprall des Pendelkörpers (3) auf die Grundplatte (2) entsteht,
wobei das Dämpfungssystem (30) für das Geräusch aus Kunststoff hergestellt ist,
wobei das Dämpfungssystem (30) einen ersten Bestandteil (31) aufweist, der axial zu einer ersten Seite der Grundplatte (2) angeordnet ist, und einen zweiten Bestandteil (32), der axial zu einer zweiten Seite der Grundplatte angeordnet ist, wobei der erste Bestandteil (31) und der zweite Bestandteil (32) separate Teile sind, die an der Grundplatte (2) angebracht sind, wobei sowohl der erste (31) als auch der zweite (32) Bestandteil so angeordnet sind, dass eine radiale Überlappung zwischen dem radialen äußeren Bereich (46) des Dämpfungssystems (30) und dem radialen inneren Bereich des Pendelkörpers (3) ermöglicht wird, wobei jeder Bestandteil (31, 32) des Dämpfungssystems (30) für das Geräusch dort eine verringerte axiale Abmessung aufweist, wo die radiale Überlappung mit dem Pendelkörper (3) auftritt, um den für den Ausschlag dieses Pendelkörpers (3) erforderlichen axialen Raum freizugeben, wobei das Dämpfungssystem axial zu jeder Seite der Grundplatte angeordnet ist und **dadurch gekennzeichnet ist, dass** das Dämpfungssystem die Grundplatte (2) axial zusammendrückt, um die Grundplatte (2) einzuklemmen.

2. Vorrichtung nach dem vorausgehenden Anspruch, wobei der Pendelkörper (3) eine erste Pendelmasse aufweist, die axial zu einer ersten Seite der Grundplatte (2) angeordnet ist, und eine zweite Pendelmasse, die axial zu einer zweiten Seite der Grundplatte (2) angeordnet ist, und mindestens ein Verbindungselement (6), das diese erste und diese zweite Pendelmasse miteinander verbindet.

3. Vorrichtung nach einem der Ansprüche 1 und 2, wobei sowohl der erste als auch der zweite Bestandteil (31, 32) des Dämpfungssystems (30) für das Geräusch mit mindestens einem Dämpfungselement für den Anschlag (50) des Pendelkörpers (3) gegen die Grundplatte (2) verbunden ist.

4. Vorrichtung nach einem der Ansprüche 1 und 3, wobei das Dämpfungselement für den Anschlag (50) axial zwischen den beiden Bestandteilen (31, 32) des Dämpfungssystems (30) für das Geräusch angeordnet ist.

5. Vorrichtung nach einem der Ansprüche 2 und 3 oder nach Anspruch 4, wobei das Dämpfungselement für den Anschlag (50) von der Grundplatte (2) getragen wird und axial zwischen der ersten Pendelmasse (5) und der zweiten Pendelmasse (5) angeordnet ist.

6. Vorrichtung nach einem der Ansprüche 3 bis 5, wobei jedes Dämpfungselement für den Anschlag (50) nacheinander, während es sich radial nach außen bewegt, einen ersten Abschnitt (55) erster Dicke und einen zweiten Abschnitt (56) zweiter Dicke aufweist, wobei die zweite Dicke geringer ist als die erste Dicke.

7. Vorrichtung nach einem der Ansprüche 1 bis 6, wobei jeder Pendelkörper (3), der ein zusätzliches Dämpfungselement (52) für den Anschlag trägt, in der Lage ist, gegen die radiale äußere Wand der Grundplatte (2) zum Aufliegen zu kommen.

8. Vorrichtung nach einem der Ansprüche 1 bis 7, wobei sowohl der erste Bestandteil (31) als auch der zweite Bestandteil (32) des Dämpfungssystems für das Geräusch eine Vielzahl von Hohlräumen (37) mit geschlossener Kontur aufweisen, die in Umfangsrichtung aufeinander folgen und nicht zur Aufnahme von Mitteln zum Befestigen des Bestandteils (31, 32) des Dämpfungssystems (30) für das Geräusch an der Grundplatte (2) vorgesehen sind.

## Claims

1. Pendulum damping device (1), comprising:
- a support (2) that is mobile about an axis of rotation (X),
- at least one pendulum body (3) that is mobile with respect to the support (2), and
- a system (30) for attenuating the noise produced in an impact between the pendulum body (3) and the support (2),
the noise attenuation system (30) being made of a plastic material,
the attenuation system (30) comprising a first part (31) arranged axially on a first side of the support (2) and a second part (32) arranged axially on a second side of the support, the first part (31) and the second part (32) being distinct parts secured to the support (2), each one of the first part (31) and the second part (32) being arranged so as to permit a radial overlap between the radially outer zone (46) of the attenuation system (30) and the radially inner zone of the pendulum body (3), each part (31, 32) of the noise attenuation system (30) having a small axial dimension, at the point where the radial overlap happens with the pendulum body (3) in order to free up the axial space required for movement of this pendulum body (3),
the attenuation system being arranged axially on either side of the support and
**characterized in that** the attenuation system axially grips the support (2) so as to pinch the support (2).

2. Device according to the preceding claim, the pendulum body (3) comprising a first pendulum mass arranged axially on a first side of the support (2) and a second pendulum mass arranged axially on a second side of the support (2) and at least one connecting member (6) securing this first and this second pendulum mass.

3. Device according to either of Claims 1 and 2, each one of the first part and the second part (31, 32) of the noise attenuation system (30) being connected to at least one member (50) for cushioning the abutment of pendulum body (3) against the support (2) .

4. Device according to Claims 1 and 3, the abutment cushioning member (50) being arranged axially between the two parts (31, 32) of the noise attenuation system (30) .

5. Device according to Claims 2 and 3, or according to Claim 4, the abutment cushioning member (50) being borne by the support (2) and arranged axially between the first pendulum mass (5) and the second pendulum mass (5) .

6. Device according to any one of Claims 3 to 5, each abutment cushioning member (50) having successively, when moving radially outward, a first portion (55) having a first thickness and a second portion (56) having a second thickness, the second thickness being less than the first thickness.

7. Device according to any one of Claims 1 to 6, each pendulum body (3) bearing an additional abutment cushioning member (52) that is able to come to bear against the radially outer edge of the support (2).

8. Device according to any one of Claims 1 to 7, each one of the first part (31) and the second part (32) of the noise attenuation system having a plurality of closed-contour cavities (37) in circumferential succession which are not designed to receive means for attaching said part (31, 32) of the noise attenuation system (30) to the support (2).
